# EUROPÄISCHE PATENTSCHRIFT

(11) **EP 2 984 331 B1**
(45) Veröffentlichungstag und Bekanntmachung des Hinweises auf die Patenterteilung: **05.07.2017**
(21) Anmeldenummer: 14706010.7
(22) Anmeldetag: 20.02.2014
(51) Int. Cl.: F03B 3/02, F03B 11/04, F03B 3/12

(54) **VORRICHTUNG UND VERFAHREN ZUR REDUKTION VON DRUCKSCHWANKUNGEN IM SAUGROHR EINER WASSER-TURBINE ODER -PUMPE ODER -PUMPTURBINE**
DEVICE AND METHOD FOR REDUCING PRESSURE FLUCTUATIONS IN THE SUCTION PIPE OF A WATER TURBINE OR WATER PUMP OR WATER PUMP TURBINE
DISPOSITIF ET PROCÉDÉ DE RÉDUCTION DE VARIATIONS DE PRESSION DANS UN TUYAU D'ADMISSION D'UNE TURBINE HYDRAULIQUE, D'UNE POMPE À EAU OU D'UNE POMPE-TURBINE À EAU

(30) Priorität: 08.04.2013 DE 102013206107
(43) Veröffentlichungstag der Anmeldung: 17.02.2016
(73) Patentinhaber: Voith Patent GmbH, 89522 Heidenheim (DE)
(72) Erfinder: MAIWALD, Marco, 89522 Heidenheim (DE); STUMMER, Manfred, 89520 Heidenheim (DE); HUBER, Anton, A-3232 Bischofsstetten (AT)
(86) Internationale Anmeldenummer: PCT/EP2014/053283
(87) Internationale Veröffentlichungsnummer: WO 2014/166663

(56) Entgegenhaltungen:
- EP-A1- 1 209 356
- EP-A2- 1 624 184
- CN-U- 201 943 879
- DE-A1- 1 528 819
- DE-A1- 10 258 557
- DE-A1-102010 050 001
- FR-A1- 2 933 455
- JP-A- H02 125 971

## Beschreibung

Die Erfindung betrifft eine Turbine oder -Pumpe oder -Pumpturbine, insbesondere das Saugrohr einer solchen Turbine, das zur Ableitung des Wassers aus der Turbine in Richtung Unterwasser dient. Die Erfindung betrifft in erster Linie Maschinen mit Laufrädern vom Typ Francis. Es kommen aber auch Maschinen mit Kaplan-Laufrädern in Betracht.

An Wasserturbinen wie Francis-Turbinen werden zunehmend höhere Anforderungen hinsichtlich des Wirkungsgrades und des möglichst ausgedehnten Betriebsbereiches gestellt. Wünschenswert ist ein variabler Einsatz hinsichtlich der Wasserdurchflussmenge vom extremen Teillastbetrieb bis hin zum Überlastbetrieb. In allen Lastbereichen soll ein möglichst hoher Wirkungsgrad bei gleichzeitig schwingungsarmen Lauf der Turbine erreicht werden.

Francis-Turbinen werden an unterschiedliche Betriebsbedingungen durch die Verstellung der Leitschaufeln angepasst. Das abströmende Wasser wird unterhalb des Laufrads innerhalb des Saugrohres durch den Krümmer umgelenkt. Je nach Betriebspunkt ergeben sich im Saugrohrkrümmer und dem anschließendem Saugrohr-Diffusor ungünstige Strömungsverhältnisse, die zu starken Schwingungen an der Maschine führen können. Materialschäden als Folge können insbesondere dann auftreten, wenn die Eigenfrequenzen von Bauteilen mit den Frequenzen dieser Schwingungen übereinstimmen. Unter den ungünstigen Strömungsverhältnissen leidet auch die Effektivität der Maschine.

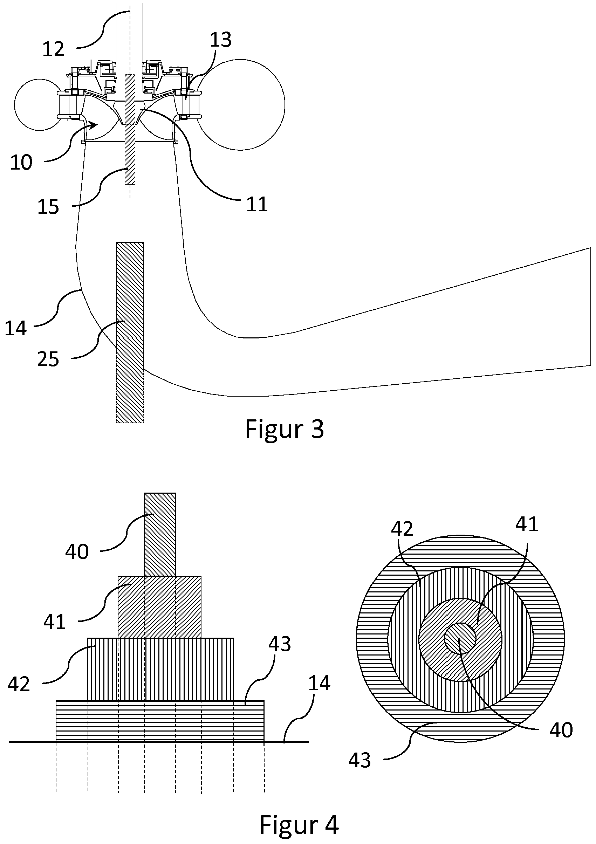

Zur Verbesserung des Abströmverhaltens sind aus dem Stand der Technik Lösungen bekannt, die die hydraulische Kontur des Saugrohres betreffen. So werden z.B. in der GB123132 verschiedene Ausführungen des Saugrohres gezeigt, bei denen sich vom Saugrohr-Grund aus konische (Fig. 4) oder auch zylindrische (Fig. 15) Körper erheben, welche die hydraulische Kontur des Saugrohres entsprechend ihrer Gestalt dauerhaft prägen. Ein anderes Beispiel wird in der DE1528819 offenbart.

In der DE10258557 werden langgestreckte Verdrängungskörper im Saugrohr angeordnet. Diese Verdrängungskörper befinden sich in Verlängerung der Maschinenachse und können rotationssymmetrisch, z.B. zylindrisch, oder auch kegelförmig sein. Diese können sowohl von der Laufradnabe ausgehen und dort befestigt sein, oder vom Saugrohr ausgehen und an diesem befestigt sein. Der Nachteil der aus dem Stand der Technik bekannten Lösungen besteht darin, dass die genannten Körper nicht nur in den Betriebszuständen, bei denen die genannten ungünstigen Strömungsverhältnisse auftreten, sondern auch in Betriebszuständen, bei denen diese nicht auftreten, in der Strömung verbleiben. Dadurch werden zwar die genannten Probleme weitgehend behoben, aber andererseits die Strömung in den unproblematischen Betriebszuständen behindert, da ohne diese Körper in diesen Betriebszuständen eine höhere Effektivität der Maschine erzielt werden könnte.

In der CN201943879U wird eine konische Verstelleinrichtung genannt, die unterhalb des Läufers angeordnet ist. Das obere Ende der konischen Verstelleinrichtung erstreckt sich in das Saugrohr. Weiterhin ist die konische Verstelleinrichtung mit einer Hebevorrichtung versehen. Wenn der Wasserdurchfluss durch die Turbine gering ist, wird die Hebevorrichtung betätigt und die Verstelleinrichtung angehoben, um so den Wasserfluss im oben genannten Sinne positiv zu beeinflussen. Damit wird eine gewisse Adaption an die unterschiedlichen Betriebsbedingungen erzielt. Da sich die konische Verstelleinrichtung jedoch in jedem Fall, d.h. auch bei Betriebszuständen mit günstigen Strömungsverhältnisen, in das Saugrohr hinein erstreckt, ergibt sich eine Behinderung der Strömung durch die konische Verstelleinrichtung in diesen Betriebszuständen.

Die Erfinder haben sich die Aufgabe gestellt, die ungünstigen Strömungsverhältnisse, die sich in bestimmten Betriebszuständen ergeben, zu beheben ohne Abstriche in den anderen Betriebszuständen hinnehmen zu müssen.

Erfindungsgemäß wird diese Aufgabe durch eine Vorrichtung für eine Wasserturbine mit den kennzeichnenden Merkmalen des Anspruchs 1 gelöst. Weitere vorteilhafte Ausgestaltungen der erfindungsgemäßen Vorrichtung ergeben sich aus den hiervon abhängigen Unteransprüchen.

Die Erfinder haben erkannt, dass sich diese Aufgabe dadurch lösen lässt, dass wenigstens ein geeigneter Verdrängungskörper bei Betriebszuständen, die ungünstige Strömungsverhältnisse aufweisen, in den Raum des Saugrohrs eingebracht wird, der sich in Verlängerung der Laufradachse erstreckt. Dieser Verdrängungskörper wird jedoch in den anderen Betriebszuständen komplett aus dem Strömungsverlauf entfernt.

Zur besseren Verständlichkeit wird im weiteren Verlauf dieser Schrift die Menge der Betriebszustände, bei denen keine ungünstigen Strömungsverhältnisse im oben genannten Sinne auftreten, mit Optimalbetriebsbereich bezeichnet. Der Optimalbetriebsbereich ist in der Regel der Betriebsbereich, für den die hydraulische Maschine hauptsächlich ausgelegt worden ist und in dem sie einen maximalen Wirkungsgrad erreicht. Es ist dabei durchaus denkbar, dass der Optimalbetriebsbereich einen größeren Bereich an Wasserdurchflussmenge umfasst, und dass dieser Bereich eventuell aus mehreren Teilbereichen zusammengesetzt ist, die nicht unbedingt miteinander zusammenhängend verbunden sind. Des Weiteren ist es durchaus möglich, dass die hydraulische Maschine auch in einem vom Optimalbetriebsbereich abweichenden Betriebszustand den selben oder annähernd den selben maximalen Wirkungsgrad erreicht, wie im Bereich des Optimalbetriebsbereichs. Unter anderem ist es Aufgabe dieser Erfindung, genau dies anzustreben. Des Weiteren ist es durchaus möglich, dass der erwähnte maximale Wirkungsgrad nur in einem Teil des Bereiches des im obigen Sinne verstandenen Optimalbetriebsbereiches erreicht wird, und der Wirkungsgrad im restlichen Bereich des Optimalbetriebsbereiches niedriger ist.

Des Weiteren haben die Erfinder erkannt, dass es von Vorteil ist, wenn die Größe des Raumes, den der jeweilige Verdrängungskörper dabei im Saugrohr einnimmt, abhängig vom jeweiligen Betriebszustand stufenlos einstellbar ist.

Diese erfinderischen Ansätze werden hierzu in zwei miteinander kombinierbaren Ausprägungsformen umgesetzt. In der ersten Ausprägungsform wird ein Verdrängungskörper aus der Turbinennabe ausgefahren und in den Betriebsbereichen, die nicht zum Optimalbetriebsbereich gehören, in den Raum des Saugrohrs eingebracht, der sich in Verlängerung der Laufradachs erstreckt. Im Optimalbetriebsbereich hingegen wird der Verdrängungskörper komplett in der Laufradnabe versenkt und somit aus dem Strömungsverlauf entfernt. Diese erste Ausprägungsform gehört für sich allein genommen nicht zu der vorliegenden Erfindung. In der anderen Ausprägungsform wird ein säulenförmiger Verdrängungskörper vom Rand des Saugrohrs ausgefahren und in den Betriebsbereichen, die nicht zum Optimalbetriebsbereich gehören, in den Raum des Saugrohrs eingebracht, der sich in Verlängerung der Laufradachs erstreckt. Diese Ausprägungsform kommt hauptsächlich aber nicht ausschließlich bei Maschinen mit vertikaler Welle und einem Saugrohr zum Einsatz, das die Wasserströmung im Wesentlichen um 90° (d.h. von vertikaler Flussrichtung in die horizontale Flussrichtung) umlenkt. Der Säulenkörper kann dabei eine beliebige Querschnittsfläche aufweisen. Im Optimalbetriebsbereich wird der säulenförmige Verdrängungskörper hingegen komplett aus dem Saugrohr herausgefahren und somit aus dem Strömungsverlauf entfernt.

Die Erfinder haben darüber hinaus erkannt, dass die optimale Nutzung der erfindungsgemäßen Vorrichtung in einem Verfahren besteht, welches durch die kennzeichnenden Merkmale des unabhängigen Verfahrensanspruchs beschrieben wird.

Dabei wird im Wesentlichen jedem Betriebszustand, der vom Optimalbetriebsbereich abweicht, eine bestimmte Größe des jeweiligen Verdrängungskörpers zugeordnet, den dieser im Saugrohr einnimmt. Diese Größe wird durch das Einführen des jeweiligen Verdrängungskörpers in den Raum unterhalb des Laufrades eingestellt.

Die Erfinder haben darüber hinaus erkannt, dass dabei der Zusammenhang zwischen dem jeweiligen vom Optimalbetriebsbereich abweichenden Betriebszustand und der Größe des jeweiligen Verdrängungskörpers, den dieser im Saugrohr einnimmt, auf unterschiedliche Weise bestimmt werden kann. Diese Varianten werden durch die kennzeichnenden Merkmale der abhängigen Verfahrensansprüche beschrieben.

Die erfindungsgemäße Lösung wird nachfolgend anhand von Figuren erläutert. Darin ist im Einzelnen folgendes dargestellt:
- Figur 1: ein Vertikalschnitt durch eine Turbine in einer nicht zur Erfindung gehörenden Ausführungsform; und
- Figur 2: ein Vertikalschnitt durch eine Turbine in einer erfindungsgemäßen Ausführungsform; und
- Figur 3: ein Vertikalschnitt durch eine erfindungsgemäße Turbine, wobei die Ausführungsformen aus Figur 1 und 2 kombiniert sind; und
- Figur 4: Seitenansicht und Draufsicht einer weiteren erfindungsgemäßen_Ausführungsform; und
- Figur 5: ein Ablaufdiagramm für ein erfindungsgemäßes Verfahren

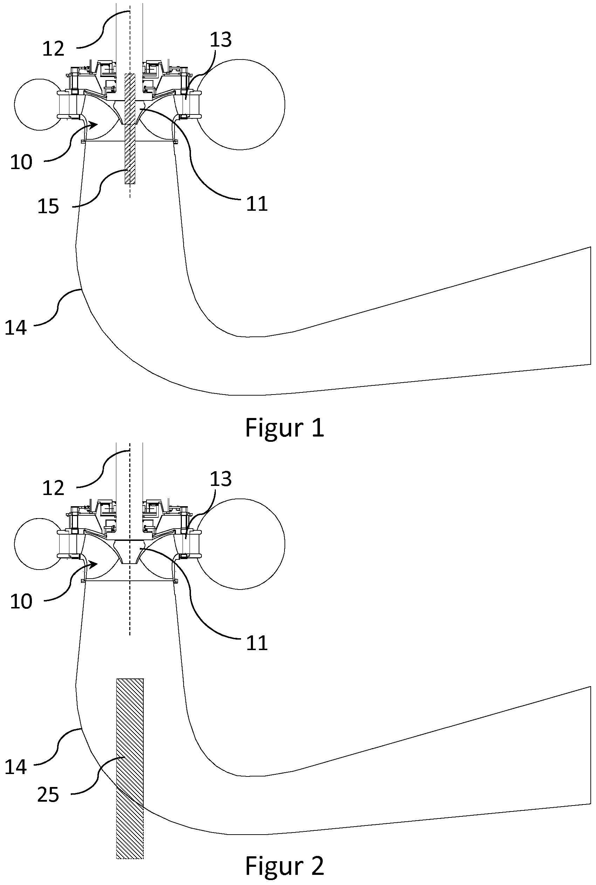

In der Darstellung der Figur 1 ist ein Schnitt durch eine Francis-Turbine gezeigt. Die dargestellte Turbine besitzt ein Laufrad 10 mit Laufradnabe 11, das um die Laufradachse 12 drehbar gelagert ist, einen Leitapparat mit einer Vielzahl von Leitschaufeln 13, die beweglich sind und mit deren Hilfe die Wasserdurchflussmenge eingestellt werden kann. Ferner besitzt die Turbine ein Saugrohr 14. Die dargestellte Turbine besitzt einen Verdrängungskörper 15. Zur besseren Kenntlichkeit ist der Verdrängungskörper 15 in der Figur schraffiert dargestellt. Der Teil des Verdrängungskörpers 15, der sich nicht im Saugrohr 14 befindet ist mit einer gestrichelten Umrandung gezeichnet. Der Verdrängungskörper 15 wird in Betriebszuständen, die vom Optimalbetriebsbereich abweichen, aus der Laufradnabe in Verlängerung der Laufradachse 12 in das Saugrohr 14 eingebracht und im Optimalbetriebsbereich komplett in die Laufradnabe versenkt, so dass kein Teil des Verdrängungskörpers 15 im Saugrohr 14 verbleibt. Dazu werden in der Laufradnabe 13 eine entsprechende Öffnung und Dichtungen vorgesehen, die ein Aus- und Einfahren des Verdrängungskörpers 15 ermöglichen. Die Größe des Raumes, den der Verdrängungskörper 15 im Saugrohr 14 einnimmt, hängt direkt mit der Länge des Verdrängungskörpers zusammen, die aus der Laufradnabe herausragt. Es ist sehr vorteilhaft, wenn das Ende des Verdrängungskörpers 15, das im ausgefahrenen Zustand am weitesten von der Laufradnabe entfernt ist, so gestaltet ist, dass es im eingefahrenen Zustand die Außenfläche der Nabe bildet und sich der hydraulischen Kontur der Nabe übergangslos anpasst, so dass im Optimalbetriebsbereich keine hydraulischen Verluste entstehen können. Des Weiteren kann die Welle, an der das Laufrad montiert ist, hohl ausgebildet sein, so dass der Verdrängungskörper 15 im eingefahrenen Zustand sich wenigstens zum Teil in der Höhlung der Welle befindet. In den meisten Fällen wird es zweckmäßig sein, dass sich der Verdrängungskörper 15 zusammen mit dem Laufrad dreht, es ist jedoch auch denkbar, dass der Verdrängungskörper 15 sich nicht zusammen mit dem Laufrad dreht, sondern relativ zum Saugrohr unbewegt bleibt. Des Weiteren ist die Ausbildung des Verdrängungskörpers 15 als zylindrische Säule besonders zweckmäßig, da dadurch das Abdichten besonders einfach zu bewerkstelligen ist. Es ist jedoch auch denkbar, dass der Verdrängungskörper 15 säulenförmig mit einem beliebigen Querschnitt ausgebildet wird. Die Anordnung aus Figur 1 gehört für sich allein genommen nicht zu der vorliegenden Erfindung.

In der Darstellung der Figur 2 ist ein Schnitt durch eine erfindungsgemäße Francis-Turbine gezeigt. Die Bezeichnungen 10, 11, 12, 13 und 14 bezeichnen dieselben Elemente der Turbine wie in Figur 1 beschrieben. Die dargestellte Turbine besitzt einen erfindungsgemäßen Verdrängungskörper 25. Der Verdrängungskörper 25 wird vom Rand des Saugrohres aus in den Bereich des Saugrohrs eingebracht, der in axialer Verlängerung des Laufrades liegt. Der Verdrängungskörper 25 besitzt eine säulenförmige Gestalt.

Im Rahmen der vorliegenden Schrift wird unter einer säulenförmige Gestalt ein Körper verstanden, der in einer Raumrichtung, die im Weiteren die Achse des Körpers genannt wird, die folgende Eigenschaft besitzt: Durch die Achse des Körpers und einem bestimmten festen Winkel relativ zu dieser Achse wird eine Schar von Schnittebenen definiert. Es hat dann die Schnittfläche (Querschnittsfläche) des säulenförmigen Körpers in jeder dieser Schnittebenen dieselbe Gestalt. Ist der Winkel 90° so spricht man von einer senkrechten Säule. Weicht der Winkel von 90° ab, so spricht man von einer schiefen Säule. Die Querschnittsfläche der Säule kann eine beliebige Gestalt haben. Es ist noch zu sagen, dass die oben gegebene Definition im Bereich der Enden der Säule nicht mehr streng erfüllt sein muss, so dass hier eine z.B. irgendwie gewölbte Endfläche vorliegen kann.

Die säulenförmige Gestalt des Verdrängungskörpers 25 ermöglicht ein Ein- und Ausfahren des Körpers entlang seiner Achse, ohne dass dabei Undichtigkeiten entstehen, durch die Wasser aus dem Saugrohr austreten kann. Es sind natürlich entsprechende Dichtungen zwischen dem Verdrängungskörper und dem Saugrohr vorzusehen. Besonders einfach zu realisieren ist dabei die sogenannte kreisförmige Säule, d.h. eine Säule, die kreisförmige Querschnittsflächen hat, und besonders vorteilhaft, die senkrechte kreisförmige Säule, d.h. der Zylinder (gemäß Anspruch 4). Bei einem kreisförmigen Querschnitt kann die Dichtung besonders kostengünstig realisiert werden.

Die Achse des säulenförmigen Verdrängungskörpers verläuft dabei im Wesentlichen koaxial mit der Drehachse des Laufrades, da in dieser Anordnung die hydraulischen Störungen in den Betriebszuständen, die vom Optimalbetriebsbereich abweichen, besonders gut unterdrückt werden können.

Es ist sehr vorteilhaft, wenn das Ende des Verdrängungskörpers 25, das im ausgefahrenen Zustand am weitesten vom Saugrohrrand entfernt ist, so gestaltet ist, dass es im eingefahrenen Zustand die Fläche des Saugrohres bildet und sich der hydraulischen Kontur des Saugrohres übergangslos anpasst, so dass im Optimalbetriebsbereich keine hydraulischen Verluste entstehen können.

Je nach den hydraulischen Gegebenheiten kann es zweckmäßig sein, dass der Verdrängungskörper 25, der vom Saugrohrrand eingebracht wird, soweit in das Saugrohr hineinragen kann, dass er sich in unmittelbarer Nähe der Laufradnabe 11 befindet.

In der Darstellung der Figur 3 ist ein Schnitt durch eine erfindungsgemäße Francis-Turbine gezeigt, bei der die Ausführungsformen aus Figur 1 und 2 in Kombination zu sehen sind. Die Bezeichnungen 10, 11, 12, 13 und 14 bezeichnen dieselben Elemente der Turbine wie in Figur 1 beschrieben. Die beiden Verdrängungskörper 15 und 25 können sich dabei so nahe kommen, dass sie sich berühren. Das ist insbesondere dann zweckmäßig, wenn sich der Verdrängungskörper 15 nicht zusammen mit dem Laufrad 10 dreht. Falls der Verdrängungskörper 15 sich zusammen mit dem Laufrad 10 dreht, muss ein ausreichend weiter Spalt zwischen den beiden Verdrängungskörpern 15 und 25 bestehen bleiben.

In der Darstellung der Figur 4 ist ein Schnitt durch eine erfindungsgemäße Anordnung gezeigt, die aus vier Verdrängungskörpern (40, 41, 42 und 43) besteht. Der linke Teil der Figur zeigt dabei die Seitenansicht und der rechte Teil der Figur die Sicht von oben. Bei den vier Verdrängungskörpern handelt es sich um einander umfassende Säulen, die vom Rand des Saugrohrs 14 aus in den Innenbereich des Saugrohrs eingefahren werden können. Jeder der vier Verdrängungskörper ist dabei einzeln bewegbar. Auf diese Weise kann eine Vielzahl von komplexen Anordnungen von Verdrängungskörpern im Saugrohr realisiert werden, je nach der Strecke, um die die einzelnen Verdrängungskörper in das Saugrohr eingefahren werden. Im Beispiel der Figur 4 ergibt sich eine stufige pyramidale Anordnung der 4 Verdrängungskörper. Natürlich ist die Anzahl der Verdrängungskörper nicht auf 4 beschränkt, sondern kann je nach den hydraulischen Anforderungen beliebig gewählt werden. Auf diese Weise können der Wirkungsgrad und die Laufruhe in Betriebszuständen, die außerhalb des Optimalbetriebsbereiches liegen, weiter erhöht werden.

In der Figur 4 ist der Saugrohrrand 14 horizontal dargestellt. In Realität können jedoch auch andere Verläufe des Saugrohrrandes 14 vorliegen.

Es ist genauso gut möglich, dass die Verdrängungskörper einander nicht umfassen, sondern sie können auch nebeneinander in beliebiger Anordnung vom Saugrohrrand 14 aus in den Innenraum eingefahren werden.

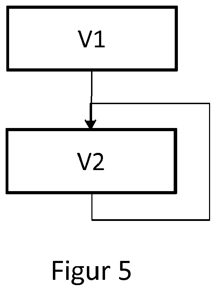

In Figur 5 ist ein Ablaufdiagramm für das erfindungsgemäße Verfahren dargestellt. Mit V1 ist das Initialisieren der Betriebszustände bezeichnet. V2 bezeichnet das Einstellen eines Betriebszustandes. Die Schleife um V2 herum deutet an, dass dieser Schritt während dem Betrieb der Anlage beliebig wiederholt werden kann, was mittels Turbinenregler bzw. eines im Regler gespeicherten Programms betriebszustandsabhängig umgesetzt wird. V1 wird dagegen in der Regel bei oder vor der Inbetriebnahme der Anlage einmalig durchgeführt. Es können jedoch auch Umstände eintreten, die eine wiederholte Durchführung von V1 notwendig machen, z.B. bei Änderungen im Anlagenlayout oder einer Überholung der Anlage. Die abhängigen Verfahrensansprüche geben zweckmäßige Ausprägungen von V1 an. Welche Ausprägung dabei besonders vorteilhaft ist, hängt von der jeweiligen Anlage und den hydraulischen Gegebenheiten der Anlage ab.

Bei der genannten Versuchsreihe kann es sich um eine Versuchsreihe handeln, die an der fertiggestellten Anlage selbst durchgeführt wird, oder um eine Versuchsreihe handeln, die an einem ggf. verkleinerten Modell der Anlage oder an einem Prototyp durchgeführt wird.

Bei der genannten Vibration kann es sich z.B. um Wellen- oder Lagerschwingungen handeln.

## Patentansprüche

1. Wasser-Turbine oder -Pumpe oder -Pumpturbine mit einem Laufrad (10), das eine Vielzahl von Laufschaufeln sowie eine Nabe (11) aufweist, mit einem Gehäuse, das einen Leitapparat zur Regulierung des Wasserflusses durch das Laufrad aufweist, mit einem Saugrohr (14) zur Führung des das Laufrad (10) durchströmenden Wassers und wenigstens einen Verdrängungskörper (25), welcher in den Bereich des Saugrohrs (14), der sich in axialer Verlängerung des Laufrades (10) erstreckt, reversibel eingebracht werden kann, wobei der Verdrängungskörper (25) vom Saugrohrrand her in den Raum des Saugrohrs einbringbar ist, **dadurch gekennzeichnet, dass** der Verdrängungskörper (25) säulenförmig ist und seine Achse im Wesentlichen koaxial mit der Drehachse (12) des Laufrades (10) verläuft.

2. Wasser-Turbine oder -Pumpe oder -Pumpturbine nach Anspruch 1, **dadurch gekennzeichnet, dass** die Größe von wenigstens einem Verdrängungskörper (25) im Saugrohr (14) einstellbar ist.

3. Wasser-Turbine oder -Pumpe oder -Pumpturbine nach einem der Ansprüche 1 oder 2, **dadurch gekennzeichnet, dass** die Größe von wenigstens einem Verdrängungskörper (25) im Saugrohr (14) stufenlos einstellbar ist.

4. Wasser-Turbine oder -Pumpe oder -Pumpturbine nach einen der Ansprüche 1 bis 3, **dadurch gekennzeichnet, dass** der wenigstens eine Verdrängungskörper (25) zylindrische Form besitzt.

5. Wasser-Turbine oder -Pumpe oder -Pumpturbine nach Anspruch 3, **dadurch gekennzeichnet, dass** der wenigstens eine Verdrängungskörper (25) einen beliebigen Querschnitt besitzt.

6. Wasser-Turbine oder -Pumpe oder -Pumpturbine nach Anspruch 3, **dadurch gekennzeichnet, dass** der wenigstens eine Verdrängungskörper (25) aus einer zentralen Säule und wenigstens einer weiteren die zentrale Säule umfassenden Säule besteht.

7. Verfahren zum Betrieb einer Wasser-Turbine oder -Pumpe oder Pumpturbine nach einem der Ansprüche 1 bis 6, enthaltend die Schritte:
Initialisieren der Betriebszustände, wiederholtes Einstellen eines Betriebszustandes, **dadurch gekennzeichnet, dass** beim Initialisieren der Betriebszustände jedem Betriebszustand eine bestimmte Größe zugeordnet wird, die der mindestens eine Verdrängungskörper (25) im Saugrohr (14) einnehmen soll, wobei allen Betriebszuständen des Optimalbetriebsbereichs die Größe Null (d.h. der wenigstens eine Verdrängungskörper (25) befindet sich nicht im Saugrohr (14)) zugeordnet wird, und dass beim wiederholten Einstellen eines Betriebszustandes der wenigstens eine Verdrängungskörper (25) so in das Saugrohr (14) eingebracht wird, dass er die während der Initialisierung für den einzustellenden Betriebszustand festgelegte Größe im Saugrohr (14) einnimmt.

8. Verfahren nach Anspruch 7, **dadurch gekennzeichnet, dass** beim Initialisieren der Betriebszustände, die für jeden Betriebszustand zuzuordnende Größe des wenigstens einen Verdrängungskörpers (25) mit Hilfe einer CFD-basierten Rechnung festgelegt wird.

9. Verfahren nach Anspruch 7, **dadurch gekennzeichnet, dass** beim Initialisierung der Betriebszustände, die für jeden Betriebszustand zuzuordnende Größe des wenigsten einen Verdrängungskörpers (25) mit Hilfe einer Versuchsreihe ermittelt wird, wobei diejenige Größe des wenigsten einen Verdrängungskörpers (25) ausgewählt wird, die eine bestimmte Kenngröße im betrachteten Betriebszustand extrem werden lässt.

10. Verfahren nach Anspruch 9, **dadurch gekennzeichnet, dass** die Kenngröße eine gemessene Vibration ist, welche im betrachteten Betriebszustand bei der ausgewählten Größe des wenigstens einen Verdrängungskörpers (25) minimal wird.

11. Verfahren nach Anspruch 9, **dadurch gekennzeichnet, dass** die Kenngröße die Anlageneffizienz ist, welche im betrachteten Betriebszustand bei der ausgewählten Größe des wenigstens einen Verdrängungskörpers (25) maximal wird.

## Claims

1. Water turbine or water pump or water pump turbine having an impeller (10) which has a multiplicity of blades and a hub (11), having a housing which has a guide apparatus for regulating the water flow through the impeller, having a suction pipe (14) for guiding the water flowing through the impeller (10), and at least one displacer (25), which can be introduced reversibly into the region of the suction pipe (14) which extends in the axial extension of the impeller (10), wherein the displacer (25) can be introduced from the edge of the suction pipe into the suction pipe space, **characterized in that** the displacer (25) is pillar-like and its axis extends substantially coaxially with the axis of rotation (12) of the impeller (10).

2. Water turbine or water pump or water pump turbine according to Claim 1, **characterized in that** the size of at least one displacer (25) in the suction pipe (14) is adjustable.

3. Water turbine or water pump or water pump turbine according to either of Claims 1 and 2, **characterized in that** the size of at least one displacer (25) in the suction pipe (14) is continuously adjustable.

4. Water turbine or water pump or water pump turbine according to one of Claims 1 to 3, **characterized in that** the at least one displacer (25) has a cylindrical form.

5. Water turbine or water pump or water pump turbine according to Claim 3, **characterized in that** the at least one displacer (25) has any desired cross section.

6. Water turbine or water pump or water pump turbine according to Claim 3, **characterized in that** the at least one displacer (25) consists of a central pillar and at least one further pillar enclosing the central pillar.

7. Method for operating a water turbine or water pump or water pump turbine according to one of Claims 1 to 6, containing the steps: initializing the operating states, repeatedly adjusting an operating state, **characterized in that** when initializing the operating states, each operating state is assigned a specific size which the at least one displacer (25) is intended to assume in the suction pipe (14), wherein all the operating states of the optimal operating region are assigned the size zero (i.e. the at least one displacer (25) is not in the suction pipe (14)), and **in that** when repeatedly adjusting an operating state, the at least one displacer (25) is introduced into the suction pipe (14) in such a way that it assumes the size in the suction pipe (14) defined during the initialization for the operating state to be adjusted.

8. Method according to Claim 7, **characterized in that** when initializing the operating states, the size of the at least one displacer (25) that is to be assigned to each operating state is defined with the aid of a CFD-based calculation.

9. Method according to Claim 7, **characterized in that** when initializing the operating states, the size of the at least one displacer (25) that is to be assigned to each operating state is determined with the aid of a series of trials, wherein that size of the at least one displacer (25) which allows a specific characteristic variable to become extreme in the operating state considered is selected.

10. Method according to Claim 9, **characterized in that** the characteristic variable is a measured vibration which, in the operating state considered, becomes a minimum at the selected size of the at least one displacer (25).

11. Method according to Claim 9, **characterized in that** the characteristic variable is the plant efficiency which, in the operating state considered, becomes a maximum at the selected size of the at least one displacer (25).

## Revendications

1. Turbine hydraulique ou pompe à eau ou turbine à pompe à eau comprenant une roue à aubes (10) pourvue d'une pluralité d'aubes mobiles et d'un moyeu (11), un carter comportant un appareil de commande destiné à la régulation du flux d'eau passant à travers la roue à aubes, un tuyau d'admission (14) destiné à acheminer l'eau s'écoulant à travers la roue à aubes (10) et au moins un corps de déplacement (25) qui peut être introduit de manière réversible dans la zone du tuyau d'admission (14) et qui s'étend suivant l'allongement axial de la roue à aubes (10), dans lequel le corps de déplacement (25) peut être introduit par le bord du tuyau d'admission dans l'espace du tuyau d'admission, **caractérisée en ce que** le corps de déplacement (25) présente la forme d'une colonne et **en ce que** son axe s'étend de manière sensiblement coaxiale à l'axe de rotation (12) de la roue à aubes (10).

2. Turbine hydraulique ou pompe à eau ou turbine à pompe à eau selon la revendication 1, **caractérisée en ce que** la taille d'au moins un corps de déplacement (25) peut être réglée dans le tuyau d'admission (14).

3. Turbine hydraulique ou pompe à eau ou turbine à pompe à eau selon l'une quelconque des revendications 1 ou 2, **caractérisée en ce que** la taille d'au moins un corps de déplacement (25) peut être réglée pas à pas dans le tuyau d'admission (14).

4. Turbine hydraulique ou pompe à eau ou turbine à pompe à eau selon l'une quelconque des revendications 1 à 3, **caractérisée en ce que** l'au moins un corps de déplacement (25) possède une forme cylindrique.

5. Turbine hydraulique ou pompe à eau ou turbine à pompe à eau selon la revendication 3, **caractérisée en ce que** l'au moins un corps de déplacement (25) présente une section transversale quelconque.

6. Turbine hydraulique ou pompe à eau ou turbine à pompe à eau selon la revendication 3, **caractérisée en ce que** l'au moins un corps de déplacement (25) est constitué d'une colonne centrale et d'au moins une autre colonne comprenant la colonne centrale.

7. Procédé de mise en fonctionnement d'une turbine hydraulique ou d'une pompe à eau ou d'une turbine à pompe à eau selon l'une quelconque des revendications 1 à 6, comportant les étapes consistant à : initialiser les états de fonctionnement, régler de manière répétée un état de fonctionnement, **caractérisé en ce que**, lors de l'initialisation des états de fonctionnement, une taille déterminée est associée à chaque état de fonctionnement, laquelle taille doit occuper au moins un corps de déplacement (25) dans le tuyau d'admission (14), dans lequel la taille est associée à zéro (c'est-à-dire que l'au moins un corps de déplacement (25) ne se trouve pas dans le tuyau d'admission (14)) pour tous les états de fonctionnement de la plage de fonctionnement optimale, et **en ce que**, lorsque le réglage d'un état de fonctionnement est répété, l'au moins un corps de déplacement (25) est introduit dans le tuyau d'admission (14) de manière à ce que, pendant l'initialisation, il ait une taille établie dans le tuyau d'admission (14) pour l'état de fonctionnement devant être réglé.

8. Procédé selon la revendication 7, **caractérisé en ce que**, lors de l'initialisation des états de fonctionnement, la taille devant être associée à chaque état de fonctionnement de l'au moins un corps de déplacement (25) est établie au moyen d'un calcul à base de CFD.

9. Procédé selon la revendication 7, **caractérisé en ce que**, lors de l'initialisation des états de fonctionnement, la taille de l'au moins un corps de déplacement (25) devant être associé à chaque état de fonctionnement est déterminée à l'aide d'une série de tests, dans lequel chaque taille de l'au moins un corps de déplacement (25) permettant à une grandeur caractéristique déterminée d'atteindre une valeur extrême dans l'état de fonctionnement observé, est sélectionnée.

10. Procédé selon la revendication 9, **caractérisé en ce que** la grandeur caractéristique est une vibration mesurée, qui est minimale dans l'état de fonctionnement observé pour la grandeur sélectionnée de l'au moins un corps de déplacement (25).

11. Procédé selon la revendication 9, **caractérisé en ce que** la grandeur caractéristique est le rendement de l'installation, qui est maximal dans l'état de fonctionnement observé pour la taille sélectionnée de l'au moins un corps de déplacement (25).
